# NEW EUROPEAN PATENT SPECIFICATION

(11) **EP 3 523 334 B2**
(45) Date of publication and mention of the opposition decision: **15.11.2023**
(45) Mention of the grant of the patent: 19.08.2020
(21) Application number: 17772730.2
(22) Date of filing: 28.09.2017
(51) Int. Cl.: C08F 2/01, C08F 2/34, C08F 4/34

(54) **PROCESS FOR MANUFACTURING POLYETHYLENE**
VERFAHREN ZUR HERSTELLUNG VON POLYETHYLEN
PROCÉDÉ DE FABRICATION DE POLYÉTHYLÈNE

(30) Priority: 04.10.2016 EP 16192270
(43) Date of publication of application: 14.08.2019
(73) Proprietor: Nouryon Chemicals International B.V., 6824BM Arnhem (NL)
(72) Inventor: VAN DER SCHUUR, Jan Martijn, NL-7553 CE Hengelo (NL); FISCHER, Bart, NL-3832 JH Leusden (NL); FRIJNS, Maurice Ludovicus Josephina, NL-7415 KG Deventer (NL); TAMMER, Martinus Catharinus, NL-7431 ZA Diepenveen (NL)
(74) Representative: LKGlobal UK Ltd.
(86) International application number: PCT/EP2017/074577
(87) International publication number: WO 2018/065280

(56) References cited:
- EP-A1- 1 216 991

## Description

The present invention relates to a process for manufacturing polyethylene by high-pressure polymerization in a tubular reactor.

Low density polyethylene (LDPE) is generally made by high pressure polymerization in either an autoclave reactor (a high pressure continuously stirred tank reactor) or a tubular reactor. The choice of reactor affects the properties of the LDPE. The extent of branching of "autoclave LDPE" is higher than of "tubular LDPE". This is due to the residence time in the reactors. A tubular reactor operates under plug flow conditions, meaning that the entire reaction mixture has the same residence time. In autoclave reactors, back mixing results in a spread of residence times. The result is a higher degree of branching of autoclave LDPE compared to tubular LDPE.

In order to obtain clear LDPE sheets, the extent of branching of the LDPE - expressed as the branching number Bn (number of branches per molecule) - should be relatively low, preferably below 15, more preferably below 10. The branching number of autoclave LDPE is generally above 15, whereas the branching number of tubular LDPE is generally below 10. Tubular LDPE is therefore preferred for preparing clear LDPE sheets.

The publication EP 1 216 991 A1 discloses containers containing specific organic peroxide formulations that can be produced in a safe manner and where the organic peroxide formulations contained therein can be used in polymerisation processes of ethylene where the resulting polymer has a reduced level of undesired residues of low-molecular weight and/or inert phlegmatising agents.

Apart from the type of reactor, also the type of polymerization initiator affects the extent of branching. Initiators that result in mainly H-abstraction instead of addition to monomer will induce more branching.

Organic peroxides having an alkyl group on one side of the peroxy function (most commonly either a tert-butyl or tert-amyl group) form alkoxy radicals upon dissociation. This alkoxy radical can either abstract a hydrogen atom to form an alcohol: 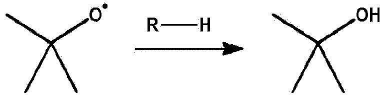 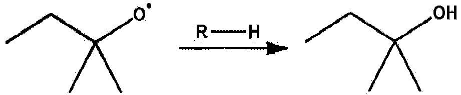 or undergo β-scission to yield a ketone and an alkyl radical:

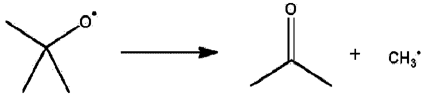

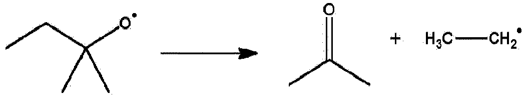

Organic peroxides that decompose into aggressive radicals like O-radicals and methyl radicals, mainly abstract hydrogen atoms, thereby forming alcohols and methane, respectively.

For the production of clear LDPE sheets, the amount of hydrogen abstraction should be relatively low.

Organic peroxides that are frequently used for the polymerization of ethylene are peroxyesters like tert-butyl peroxy-2-ethylhexanoate and tert-amyl peroxy-2-ethylhexanoate:

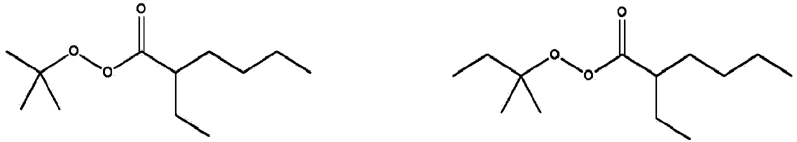

Of these peroxides, tert-butyl peroxy-2-ethylhexanoate forms an aggressive methyl radical upon β-scission, whereas tert-amyl peroxy-2-ethylhexanoate gives the more selective ethyl radical. Hence, tert-amyl peroxy-2-ethylhexanoate gives less hydrogen abstraction than tert-butyl peroxy-2-ethylhexanoate.

It has now surprisingly been found that hydrogen abstraction can be further reduced by using tert-amyl peroxyisobutyrate as initiator:

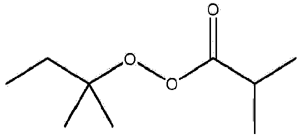

This is surprising because this peroxide forms the same tert-amyloxy radical as tert-amyl peroxy-2-ethylhexanoate.

In addition, it has been found that tert-amyl peroxyisobutyrate has a higher efficiency than tert-butyl peroxy-2-ethylhexanoate and tert-amyl peroxy-2-ethylhexanoate in terms of reduced termination reactions of primary radicals inside the solvent cage.

Hence, this peroxide is able to produce polyethylene with a low degree of branching which is very suitable for preparing clear polyethylene films.

The present invention therefore relates to a process for manufacturing a polyethylene homo- or copolymer by conducting high-pressure polymerization of ethylene, optionally in combination with one or more co-monomers, in a tubular reactor, wherein tert-amyl peroxyisobutyrate is used as polymerization initiator, wherein the polymerization is conducted at a temperature in the range 160-350°C, and wherein tert-amyl peroxyisobutyrate is introduced into the tubular reactor along the length of the tube at from 2 to 6 inlet points, so that from 2 to 6 reaction zones are obtained in which polymerization is initiated.

The polymerization is carried out at pressures that are preferably in the range 500-5000 bar, more preferably 1500-3500 bar, and most preferably 2000-3300 bar.

The reaction temperature is preferably in the range 160-320°C.

Tert-amyl peroxyisobutyrate can be dosed to the reactor 100% pure or, more preferably, as a solution in hydrocarbons, such as odorless mineral spirit, isododecane, or one or more reactive diluents. A reactive diluent is a liquid unsaturated hydrocarbon that can copolymerize with ethylene. Examples of reactive diluents are olefins, more preferably C₆₋₁₂ alpha-olefins.

The tert-amyl peroxyisobutyrate concentration in such solution is preferably in the range 5-50 wt%, more preferably 10-30 wt%.

According to the present invention, tert-amyl peroxyisobutyrate is preferably added to the reactor in amounts of 100 to 1000 ppm (weight parts per million), more preferably 100-500 ppm, calculated as pure peroxide and based on the weight of polyethylene.

The process of the present invention can be used both for the homopolymerization of ethylene and for the co-polymerization of ethylene with other monomers, provided that these monomers undergo free-radical polymerization with ethylene under high pressure. Examples of suitable co-polymerizable monomers are α,β-ethylenically unsaturated C₃-C₈-carboxylic acids (e.g. maleic acid, fumaric acid, itaconic acid, acrylic acid, methacrylic acid, or crotonic acid), α,β-ethylenically unsaturated C₃-C₁₅-carboxylic esters or anhydrides (e.g. methyl methacrylate, ethyl methacrylate, n-butyl methacrylate, or tert-butyl methacrylate, methyl acrylate, ethyl acrylate, n-butyl acrylate, 2-ethylhexyl acrylate, tert-butyl acrylate, methacrylic anhydride, maleic anhydride or itaconic anhydride), α-olefins (e.g. propene, 1-butene, 1-pentene, 1-hexene, 1-octene, or 1-decene). In addition, it is possible to use vinyl carboxylates, particularly preferably vinyl acetate, as co-monomers.

The proportion of co-monomers in the reaction mixture is preferably in the range 0-45 wt%, more preferably 3-35 wt%, based on the weight of ethylene monomer. Most preferably, the process is used for the manufacture of ethylene homopolymer, more in particular low density polyethylene homopolymer.

The polymer resulting from the process of the present invention preferably has a density in the range 910-940 kg/m³, more preferably 918-926 kg/m³ and most preferably 920-925 kg/m³. The density is mostly controlled by the reactor pressure and temperature profile and can also be influenced by means of the chain regulators and/or co-monomers.

Low density polyethylene (LDPE) is defined as having a density in the range 0.910-0.940 g/cm³.

The melt flow index of the resulting polymer in accordance with DIN 53 735 (190°C/2.16 kg) is preferably less than 50 g/10 min, more preferably less than 10 g/10 min, and most preferably less than 5 g/10 min.

Polymerization initiator(s) is/are introduced into the tubular reactor along the length of the tube at from 2 to 6 inlet points, so that from 2 to 6 reaction zones are obtained in which polymerization is initiated. More preferably 3-5 initiator inlet points are used and 3-5 reaction zones are created.

Tert-amyl peroxyisobutyrate is introduced in 2 to 6 reaction zones. Most preferably, it is introduced in every reaction zone.

In addition to tert-amyl peroxyisobutyrate, one or more co-initiators can be used in the process of the present invention. In a preferred embodiment, one such co-initiator has a higher reactivity (i.e. shorter half-life) and one or more, preferably one or two, of such co-initiators has/have a lower reactivity (i.e. longer half-life) than tert-amyl peroxyisobutyrate at a specific temperature.

Examples of co-initiators with a higher reactivity than tert-amyl peroxyisobutyrate are di(2-ethylhexyl)peroxydicarbonate, tert-butyl peroxyneodecanoate, tert-amyl peroxyneodecanoate, tert-amyl peroxypivalate, and tert-butyl peroxypivalate. Tert-butyl peroxypivalate is a highly preferred co-initiator with higher reactivity, especially for the production of ethylene homopolymers. For the production of ethylene co-polymers, di(2-ethylhexyl)peroxydicarbonate and tert-butyl peroxyneodecanoate are highly preferred co-initiators with higher reactivity.

Examples of co-initiators with a lower reactivity than tert-amyl peroxyisobutyrate are tert-butyl peroxy-3,3,5-trimethylhexanoate, tert-butyl peroxybenzoate, 2,2-di(tert-butylperoxy)butane, tert-butyl peroxyacetate, tert-butyl peroxy isopropyl carbonate, di-tert-butyl peroxide, and 3,3,5,7,7-pentamethyl-1,2,4-trioxepane. Di-tert-butyl peroxide and tert-butyl peroxy-3,3,5-trimethylhexanoate are a highly preferred co-initiators with lower reactivity, with di-tert-butyl peroxide being the most preferred.

Specifically preferred combinations of initiators for use in the process of the present invention are:
- the combination of tert-butyl peroxypivalate, tert-amyl peroxyisobutyrate, tert-butyl peroxy-3,3,5-trimethylhexanoate, and di-tert-butyl peroxide,
- the combination of tert-butyl peroxypivalate, tert-amyl peroxyisobutyrate, tert-butyl peroxybenzoate, and di-tert-butyl peroxide,
- the combination of tert-butyl peroxypivalate, tert-amyl peroxyisobutyrate, 2,2-di(tert-butylperoxy)butane, and di-tert-butyl peroxide,
- the combination of tert-butyl peroxypivalate, tert-amyl peroxyisobutyrate, tert-butyl peroxyacetate, and di-tert-butyl peroxide,
- the combination of tert-butyl peroxypivalate, tert-amyl peroxyisobutyrate, tert-butyl peroxybenzoate, and tert-butyl peroxy-3,3,5-trimethylhexanoate,
- the combination of tert-butyl peroxypivalate, tert-amyl peroxyisobutyrate, 2,2-di(tert-butylperoxy)butane, and tert-butyl peroxy-3,3,5-trimethylhexanoate,
- the combination of tert-butyl peroxypivalate, tert-amyl peroxyisobutyrate, tert-butyl peroxyacetate, and tert-butyl peroxy-3,3,5-trimethylhexanoate,
- the combination of di(2-ethylhexyl)peroxydicarbonate, tert-amyl peroxyisobutyrate, tert-butyl peroxy-3,3,5-trimethylhexanoate, and di-tert-butyl peroxide,
- the combination of di(2-ethylhexyl)peroxydicarbonate, tert-amyl peroxyisobutyrate, tert-butyl peroxybenzoate, and di-tert-butyl peroxide,
- the combination of di(2-ethylhexyl)peroxydicarbonate, tert-amyl peroxyisobutyrate, 2,2-di(tert-butylperoxy)butane, and di-tert-butyl peroxide,
- the combination of di(2-ethylhexyl)peroxydicarbonate, tert-amyl peroxyisobutyrate, tert-butyl peroxyacetate, and di-tert-butyl peroxide,
- the combination di(2-ethylhexyl)peroxydicarbonate, tert-amyl peroxyisobutyrate, tert-butyl peroxybenzoate, and tert-butyl peroxy-3,3,5-trimethylhexanoate,
- the combination of di(2-ethylhexyl)peroxydicarbonate, tert-amyl peroxyisobutyrate, 2,2-di(tert-butylperoxy)butane, and tert-butyl peroxy-3,3,5-trimethylhexanoate,
- the combination of di(2-ethylhexyl)peroxydicarbonate, tert-amyl peroxyisobutyrate, tert-butyl peroxyacetate, and tert-butyl peroxy-3,3,5-trimethylhexanoate,
- the combination of tert-butylperoxyneodecanoate, tert-amyl peroxyisobutyrate, tert-butyl peroxy-3,3,5-trimethylhexanoate, and di-tert-butyl peroxide,
- the combination of tert-butylperoxyneodecanoate, tert-amyl peroxyisobutyrate, tert-butyl peroxybenzoate, and di-tert-butyl peroxide,
- the combination of tert-butylperoxyneodecanoate, tert-amyl peroxyisobutyrate, 2,2-di(tert-butylperoxy)butane, and di-tert-butyl peroxide,
- the combination of tert-butylperoxyneodecanoate, tert-amyl peroxyisobutyrate, tert-butyl peroxyacetate, and di-tert-butyl peroxide,
- the combination tert-butylperoxyneodecanoate, tert-amyl peroxyisobutyrate, tert-butyl peroxybenzoate, and tert-butyl peroxy-3,3,5-trimethylhexanoate,
- the combination of tert-butylperoxyneodecanoate, tert-amyl peroxyisobutyrate, 2,2-di(tert-butylperoxy)butane, and tert-butyl peroxy-3,3,5-trimethylhexanoate,
- the combination of tert-butylperoxyneodecanoate, tert-amyl peroxyisobutyrate, tert-butyl peroxyacetate, and tert-butyl peroxy-3,3,5-trimethylhexanoate.

In one embodiment, the total amount of monomer - and, if desired, co-monomer - is introduced at the reactor inlet. In another embodiment, the tubular reactor has at least two reaction zones into each of which additional cold or pre-heated monomer and/or cold or pre-heated co-monomer is/are introduced as a fresh gas stream before the beginning of each reaction zone. Preference is given to at least three successive reaction zones.

Examples of suitable tubular reactors are disclosed in US 4,135,044 and 4,175,169. These reactors have a comparatively small tube diameter in each reaction zone from the introduction point for initiator to the temperature maximum, compared to the enlarged tube diameter in the subsequent cooling zone (from the temperature maximum to the next introduction point for initiator). This enables a high conversion to be achieved at a relatively low pressure drop over the length of the reactor.

The tubular reactor is usually provided with a cooling jacket to remove the reaction heat.

The ratio of length-to-diameter of the tubular reactor is preferably in the range 10000-50000, more preferably 15000-35000.

The mean residence time of the reaction mixture in the tubular reactor is generally in the range 30-300 seconds, more in particular 30-120 seconds.

In the process of the present invention, the molar mass of the polyethylene to be prepared can be regulated in conventional ways by the addition of molecular weight regulators. Examples of such regulators are aliphatic and olefinic hydrocarbons (e.g. pentane, hexane, cyclohexane, propene, pentene, or hexene), ketones (e.g. acetone, diethyl ketone, or diamyl ketone), aldehydes (e.g. formaldehyde or acetaldehyde), and saturated aliphatic alcohols (e.g. methanol, ethanol, propanol, or butanol). Particular preference is given to using saturated aliphatic aldehydes, in particular propionaldehydes, or α-olefins such as propene or hexene. The molecular weight regulator is preferably added to the reaction mixture upstream of the tubular reactor or together with the polymerization initiator at the various inlet points along the reactor.

After the last introduction of polymerization initiator, the reaction mixture is cooled in order to allow discharge of the product from the reactor. The reaction mixture is ejected at the outlet end of the tubular reactor by means of an appropriate high-pressure let-down valve system. After discharge of the reaction mixture, the polymer is separated from any unreacted monomers by depressurization, after which the monomers can be re-circulated to the reactor.

The resulting polyethylene is highly suitable to make polyethylene films and film products.

### EXAMPLE

In this example, the decomposition of tert-butyl peroxy-2-ethylhexanoate, tert-amyl peroxy-2-ethylhexanoate, and tert-amyl peroxyisobutyrate under conditions comparable to those in an ethylene polymerization process was studied.

Solutions of the peroxides in n-nonane (0.1 M) were prepared and the peroxides were completely decomposed in a continuous flow reactor at a temperature of 175°C and a pressure of 2000 bar.

To compare the selected peroxides, the amount of acetone formed during total decomposition was taken as a measure for the amount of β-scission. The results are displayed in Table 1, which shows that tert-amyl peroxyisobutyrate undergoes significantly more β-scission than the other two peroxides. Tert-amyl peroxyisobutyrate thus forms a higher number of selective alkyl-radicals and gives reduced hydrogen abstraction. This will result in less branching.

**Table 1**

| | Acetone (mol/mol peroxide) |
|---|---|
| tert-amylperoxy isobutyrate | 0.515 |
| tert-butylperoxy 2-ethylhexanoate | 0.094 |
| tert-amylperoxy 2-ethylhexanoate | 0.301 |

The in-cage termination reactions affect the efficiency of peroxides. If the radicals that are formed upon peroxide dissociation are directly consumed inside the solvent cage to form ethers (through in-cage decarboxylation) and alkenes (through in-cage disproportionation), the efficiency drops, simply because these radicals are not available for polymerization initiation. Hence, the formation of alkenes and ethers is an indicator for the efficiency.

**Table 2**

| | Ether (mol/mol peroxide) | Alkene (mol/mol peroxide) |
|---|---|---|
| tert-amylperoxy isobutyrate | 0.13 | 0.03 |
| tert-butylperoxy 2-ethylhexanoate | 0.14 | 0.42 |
| tert-amylperoxy 2-ethylhexanoate | 0.21 | 0.37 |

Table 2 shows that tert-amyl peroxyisobutyrate gives less in-cage reactions than the other two peroxides, indicating a higher efficiency.

## Claims

1. Process for manufacturing a polyethylene homo- or copolymer by conducting high-pressure polymerization of ethylene, optionally in combination with one or more co-monomers, in a tubular reactor, wherein tert-amyl peroxyisobutyrate is used as polymerization initiator, wherein the polymerization is conducted at a temperature in the range 160-350°C, and wherein tert-amyl peroxyisobutyrate is introduced into the tubular reactor along the length of the tube at from 2 to 6 inlet points, so that from 2 to 6 reaction zones are obtained in which polymerization is initiated.

2. Process according to claim 1 wherein the polymerization is conducted at a pressure in the range 500-5000 bar.

3. Process according to any one of the preceding claims wherein the polyethylene is low density polyethylene (LDPE).

4. Process according to any one of the preceding claims, wherein one or more co-initiators are used.

5. Process according to claim 4, using, as co-initiator, a peroxide selected from the group consisting of di(2-ethylhexyl)peroxydicarbonate, tert-butyl peroxyneodecanoate, tert-amyl peroxyneodecanoate, tert-amyl peroxypivalate, and tert-butyl peroxypivalate.

6. Process according to claim 5 wherein the co-initiator is tert-butyl peroxypivalate.

7. Process according to claim 5 wherein the co-initiator is di(2-ethylhexyl)peroxydicarbonate or tert-butyl peroxyneodecanoate.

8. Process according to any one of claims 4-7, using, as co-initiator, a peroxide selected from the group of tert-butyl peroxy-3,3,5-trimethylhexanoate, tert-butyl peroxybenzoate, 2,2-di(tert-butylperoxy)butane, tert-butyl peroxyacetate, tert-butyl peroxy isopropyl carbonate, di-tert-butyl peroxide, and 3,3,5,7,7-pentamethyl-1 ,2,4-trioxepane.

9. Process according to claim 8 wherein the co-initiator is di-tert-butyl peroxide or tert-butyl peroxy-3,3,5-trimethylhexanoate.

## Patentansprüche

1. Verfahren zur Herstellung eines Polyethylenhomo- oder -copolymers durch Durchführung einer Hochdruckpolymerisation von Ethylen, wahlweise in Kombination mit einem oder mehreren Comonomeren, in einem Rohrreaktor, wobei tert-Amylperoxyisobutyrat als Polymerisationsinitiator verwendet wird, wobei die Polymerisation bei einer Temperatur im Bereich von 160 bis 350 °C durchgeführt wird und wobei tert-Amylperoxyisobutyrat in den Rohrreaktor entlang der Länge des Rohres an 2 bis 6 Einlassstellen eingeführt wird, so dass 2 bis 6 Reaktionszonen erhalten werden, in denen eine Polymerisation eingeleitet wird.

2. Verfahren nach Anspruch 1, wobei die Polymerisation bei einem Druck im Bereich von 500 bis 5000 bar durchgeführt wird.

3. Verfahren nach einem der vorhergehenden Ansprüche, wobei das Polyethylen Polyethylen niedriger Dichte (LDPE) ist.

4. Verfahren nach einem der vorhergehenden Ansprüche, wobei ein oder mehrere CoInitiatoren verwendet werden.

5. Verfahren nach Anspruch 4, wobei als Coinitiator ein Peroxid verwendet wird, das ausgewählt ist aus der Gruppe bestehend aus Di(2-ethylhexyl)peroxydicarbonat, tert-Butylperoxyneodecanoat, tert-Amylperoxyneodecanoat, tert-Amylperoxypivalat und tert-Butylperoxypivalat.

6. Verfahren nach Anspruch 5, wobei der Co-Initiator Tert-Butylperoxypivalat ist.

7. Verfahren nach Anspruch 5, wobei der Coinitiator Di(2-ethylhexyl)peroxydicarbonat oder tert-Butylperoxyneodecanoat ist.

8. Verfahren nach einem der Ansprüche 4 bis 7, wobei als Co-Initiator ein Peroxid verwendet wird, das ausgewählt ist aus der Gruppe von tert-Butylperoxy-3,3,5-trimethylhexanoat, tert-Butylperoxybenzoat, 2,2-Di(tert-Butylperoxy)butan, tert-Butylperoxyacetat, tert-Butylperoxyisopropylcarbonat, Di-tert-butylperoxid und 3,3,5,7,7-Pentamethyl-1,2,4-trioxepan.

9. Verfahren nach Anspruch 8, wobei der Coinitiator Di-tert-butylperoxid oder tert-Butylperoxy-3,3,5-trimethylhexanoat ist.

## Revendications

1. Procédé de fabrication d'un homo- ou copolymère de polyéthylène en réalisant une polymérisation à haute pression d'éthylène, éventuellement en combinaison avec un ou plusieurs comonomères, dans un réacteur tubulaire, dans lequel du peroxyisobutyrate de tert-amyle est utilisé comme initiateur de polymérisation, dans lequel la polymérisation est réalisée à une température dans la plage de 160 à 350 °C, et dans lequel le peroxyisobutyrate de tert-amyle est introduit dans le réacteur tubulaire le long de la longueur du tube au niveau de 2 à 6 points d'entrée, de sorte que 2 à 6 zones de réaction sont obtenues dans lesquelles la polymérisation est initiée.

2. Procédé selon la revendication 1, dans lequel la polymérisation est réalisée à une pression dans la plage de 500 à 5000 bar.

3. Procédé selon l'une quelconque des revendications précédentes dans lequel le polyéthylène est du polyéthylène basse densité (LDPE).

4. Procédé selon l'une quelconque des revendications précédentes, dans lequel un ou plusieurs co-initiateurs sont utilisés.

5. Procédé selon la revendication 4, utilisant, comme co-initiateur, un peroxyde choisi dans le groupe constitué par le peroxydicarbonate de di(2-éthylhexyle), le peroxynéodécanoate de tert-butyle, le peroxynéodécanoate de tert-amyle, le peroxypivalate de tert-amyle et le peroxypivalate de tert-butyle.

6. Procédé selon la revendication 5 dans lequel le co-initiateur est le peroxypivalate de tert-butyle.

7. Procédé selon la revendication 5 dans lequel le co-initiateur est le peroxydicarbonate de di(2-éthylhexyle) ou le peroxynéodécanoate de tert-butyle.

8. Procédé selon l'une quelconque des revendications 4 à 7, utilisant, comme co-initiateur, un peroxyde choisi dans le groupe du peroxy-3,3,5-triméthylhexanoate de tert-butyle, du peroxybenzoate de tert-butyle, du 2,2-di(tert-butylperoxy)butane, du peroxyacétate de tert-butyle, du peroxyisopropylcarbonate de tert-butyle, du peroxyde de di-tert-butyle et du 3,3,5,7,7-pentaméthyl-1,2,4-trioxépane.

9. Procédé selon la revendication 8 dans lequel le co-initiateur est le peroxyde de di-tert-butyle ou le peroxy-3,3,5-triméthylhexanoate de tert-butyle.
